# EUROPEAN PATENT APPLICATION

(11) **EP 4 604 208 A1**
(43) Date of publication of application: **20.08.2025**
(21) Application number: 24883541.5
(22) Date of filing: 23.10.2024
(51) Int. Cl.: H01M 4/36, H01M 4/525, H01M 4/505, H01M 4/131, H01M 10/052, C01G 53/00, H01M 4/02

(54) **POSITIVE ELECTRODE ACTIVE MATERIAL FOR ALL-SOLID-STATE BATTERIES, METHOD FOR PRODUCING SAME, AND POSITIVE ELECTRODES AND ALL-SOLID-STATE BATTERIES COMPRISING SAME**

(30) Priority: 09.11.2023 KR 20230154597; 09.11.2023 KR 20230154618; 22.10.2024 KR 20240144764
(71) Applicant: LG Energy Solution, Ltd., Seoul 07335 (KR); UNIVERSITY-INDUSTRY COOPERATION GROUP OF KYUNG HEE UNIVERSITY, Yongin-si, Gyeonggi-do 17104 (KR)
(72) Inventor: KIM, Myeongsoo, Daejeon 34122 (KR); PARK, Min-Sik, Seoul 05792 (KR); KWON, Hyejin, Daejeon 34122 (KR); SONG, Min Sang, Daejeon 34122 (KR); KANG, Sora, Daejeon 34122 (KR); BYEON, Yun Seong, Seoul 05316 (KR); KIM, Dongil, Ulsan 44202 (KR)
(74) Representative: Goddar, Heinz J.
(86) International application number: PCT/KR2024/016116
(87) International publication number: WO 2025/100789

(57) **Abstract**

The present invention relates to a positive electrode active material for an all-solid-state battery, a method of preparing same, and a positive electrode for an all-solid-state battery and an all-solid-state battery comprising same.

## Description

### [Technical Field]

This application claims the benefit of priority to Korean Patent Application No. 10-2023-0154597, filed November 9, 2023, Korean Patent Application No. 10-2023-0154618, filed November 9, 2023, and Korean Patent Application No. 10-2024-0144764, filed October 22, 2024, the disclosures of which are incorporated herein by reference in their entirety.

The present invention relates to a positive electrode active material for an all-solid-state battery, a method of preparing same, and a positive electrode for an all-solid-state battery and an all-solid-state battery comprising same.

### [Related Art]

Lithium secondary batteries are widely used as a power source for portable devices, including IT mobile devices, and in recent years, the market has grown from small lithium secondary batteries to medium and large-sized secondary batteries. In particular, its use as an automotive battery is growing rapidly. In order for lithium secondary batteries to be used as a power source for electric vehicles, they need to have high energy density and high power characteristics, and safety is of particular importance.

Conventional lithium secondary batteries use liquid, non-aqueous organic electrolytes, which can ignite and explode. It is urgent to resolve these issues, as explosion accidents involving products utilizing these batteries continue to occur.

All-solid-state batteries replace these organic electrolytes with solid electrolytes, which means that all of the components of the battery, including electrodes and electrolyte, are solid, and the risk of ignition and explosion is eliminated due to the high safety of the solid electrolyte itself.

Candidates for solid electrolytes for all-solid-state lithium ion secondary batteries include gel-type polymer electrolytes, and sulfide-based and oxide-based solid electrolytes, among which sulfide-based solid electrolytes exhibit high lithium ion conductivity of at least 1X10⁻²S/cm, have a wide potential window of at least 5V, and have low degradation of properties even in extreme environments, and have great advantages in the design of Li-ion secondary batteries having high energy density.

In the case of all-solid-state batteries with such sulfide-based solid electrolytes, the high interfacial resistance at the interface of the positive electrode active material and the sulfide-based solid electrolyte results in poor capacity utilization. The main causes of this interfacial resistance are proposed to be 1) the space charge layer phenomenon, which is the formation of a lithium deficient layer at the solid electrolyte interface due to the difference in chemical potential of the lithium ions in the positive electrode active material and the solid electrolyte, and 2) the formation of an interfacial impurity layer due to chemical reactions at the interface of the positive electrode active material and the solid electrolyte.

In order to solve the above problems, the technology of introducing a coating layer on the surface of the positive electrode active material is being applied, and lithium oxide of Li-M-O (wherein M is B, Al, Zr, P, Ti, Nb, or W) is known as the material of the coating layer. However, the coating layer materials known to date are still insufficient to solve the above problems, and there is a need to develop coating layer materials that can reduce the interfacial resistance at the interface of positive electrode active material and sulfide-based solid electrolyte.

### [Prior art]

### [Patent Reference]

Korean Laid-open Patent Publication No. 10-2017-0070239

### [Detailed Description of the Invention]

### [Technical Problem]

In order to solve the above problems, the inventors of the present invention conducted various studies and found that coating the surface of the positive electrode active material, lithium metal oxide, with lithium aluminum gallium fluoride, a compound represented by the following Formula 1, or lithium gallium fluoride, a compound represented by the following Formula 2, can reduce the interfacial resistance between the positive electrode active material and the solid electrolyte, and thus completed the present invention.

Accordingly, it is an object of the present invention to provide a positive electrode active material for an all-solid-state battery capable of reducing the interfacial resistance between a positive electrode active material and a solid electrolyte, a method for preparing same, and a positive electrode comprising same.

It is also an object of the present invention to provide an all-solid-state battery comprising the positive electrode, which has excellent lifetime characteristics and discharge capacity.

### [Technical Solution]

To accomplish the above objectives, the present invention provides a positive electrode active material for an all-solid-state battery comprising a core portion comprising a lithium metal oxide; and a coating portion located on a surface of the core portion and comprising a compound represented by Formula 1 or 2.

[Formula 1] Li₃₊ₓAl_{[1-(1/3)x-y]}Ga_{y}F₆

wherein x is 0≤x≤0.3, y is 0<y<1, and 0<(1/3)x+y<1.

[Formula 2] Li_{3+z}Ga_{[1-(1/3)z]}F₆

wherein z is -0.6≤z≤0.3.

The present invention provides a method for preparing a positive electrode for an all-solid-phase battery, comprising (1) mixing a lithium precursor, an aluminum precursor, a gallium precursor, a fluorine precursor, and a lithium metal oxide, or mixing a lithium precursor, a gallium precursor, a fluorine precursor, and a lithium metal oxide to prepare a mixture;
(2) heating and drying the mixture; and
(3) calcining the heated and dried mixture.

The present invention also provides a positive electrode for an all-solid-state battery comprising the positive electrode active material of the present invention, a solid electrolyte, a conductive material, and a binder.

The present invention also provides an all-solid-state battery comprising a positive electrode of the present invention; a negative electrode; and a solid electrolyte layer between the positive electrode and negative electrode.

### [Advantageous Effects]

Since the positive electrode active material for an all-solid-state battery of the present invention includes a coating portion comprising a compound represented by Formula 1 or 2, on the surface of a core portion comprising lithium metal oxide, the side reactions occurring between the positive electrode active material and the solid electrolyte can be suppressed, thereby reducing the interfacial resistance.

Accordingly, the all-solid-state battery comprising the positive electrode active material may have improved lifetime characteristics and discharge capacity.

### [Best Mode]

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

The terminology used in the present invention is used to describe certain examples only and is not intended to limit the invention. Expressions in the singular include the plural unless the context clearly indicates otherwise. In the present invention, the terms "comprise" or "have" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

Hereinafter, the invention will be described in more detail.

All-solid-state batteries use a solid electrolyte to conduct lithium ions, and as a result, the movement of lithium ions by charging and discharging occurs in a solid state. In other words, since all-solid-state batteries only allow the movement of lithium ions through the actual contact site of the positive electrode and solid electrolyte, minimizing the interfacial resistance between the positive electrode and solid electrolyte can improve the performance of all-solid-state batteries.

However, at the actual contact site between the positive electrode and the solid electrolyte, side reactions occur, increasing the interfacial resistance.

Accordingly, the present invention seeks to provide a positive electrode active material capable of reducing the interfacial resistance of a positive electrode and a solid electrolyte.

### Positive Electrode Active Material for All-solid-state Battery

The present invention relates to a positive electrode active material for an all-solid-state battery, comprising a core portion comprising a lithium metal oxide; and a coating portion located on a surface of the core portion and comprising a compound represented by Formula 1 or 2.

[Formula 1] Li₃₊ₓAl_{[1-(1/3)x-y]}Ga_{y}F₆

wherein x is 0≤x≤0.3, y is 0<y<1, and 0<(1/3)x+y<1.

[Formula 2] Li_{3+z}Ga_{[1-(1/3)z]}F₆

wherein z is -0.6≤z≤0.3.

The positive electrode active material of the present invention may have a core-shell structure, wherein the core portion comprises a lithium metal oxide and the coating portion corresponding to the shell comprises a compound represented by Formula 1 or 2. More specifically, the positive electrode active material of the present invention may comprise a core portion comprising a lithium metal oxide as the positive electrode active material, and a coating portion comprising as a buffer layer, a compound represented by Formula 1. Alternatively, the positive electrode active material of the present invention may comprise a core portion comprising a lithium metal oxide as the positive electrode active material, and a coating portion comprising as a buffer layer, a compound represented by Formula 2.

The lithium metal oxide is a material capable of inserting and removing lithium ions and is not particularly limited as long as it can be used as a positive electrode active material in a lithium ion secondary battery.

For example, the positive electrode active material may include, but not limited to, a layered compound such as lithium cobalt oxide (LiCoO₂), or lithium nickel oxide (LiNiO₂), or a compound substituted with one or more transition metals; at least one elected from the group consisting of the formula LiₓM_{y}O₂ (wherein M is at least one selected from Co, Mn, Ni, Al, Fe, V, Zn, Cr, Ti, Ta, Mg, Mo, Zr, W, Sn, Hf, Nd, or Gd, wherein 0<x≤1.5, and 0<y≤1); a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₈; Ni site-type lithium nickel compound represented by LiNi₁₋ₓMₓO₂ (wherein M is Co, Mn, Al, Cu, Fe, Mg, B or Ga; and 0.01≤x≤0.3); a lithium manganese complex oxide represented by LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; or LiFePO₄.

The coating portion may be located on a surface of the core portion and may comprise a compound represented by Formula 1 or 2 below.

[Formula 1] Li₃₊ₓAl_{[1-(1/3)x-y]}Ga_{y}F₆

wherein x is 0≤x≤0.3, y is 0<y<1, and 0<(1/3)x+y<1.

[Formula 2] Li_{3+z}Ga_{[1-(1/3)z]}F₆

wherein z is -0.6≤z≤0.3.

In other words, the positive electrode active material for an all-solid-state battery of the present invention may be in the form of a lithium metal oxide, which is a positive electrode active material, coated with a compound represented by Formula 1 or 2. The coating may mean that the compound represented by Formula 1 or 2 is physically and/or chemically bonded to the surface of the core portion. Furthermore, the compound represented by Formula 1 or 2 may cover the entire surface of the core portion, or may be distributed in an island type or flake type on the surface of the core portion, and if distributed in an island type or flake type, may be spaced apart from each other at predetermined intervals. Preferably, the compound represented by Formula 1 or 2 may be distributed in such a way that it uniformly covers the entire surface of the core portion. If the compound represented by Formula 1 or 2 is uniformly coated over the entire surface of the core portion, the coating layer of the compound represented by Formula 1 or 2 can prevent direct contact between the positive electrode active material and the solid electrolyte, thereby inhibiting interfacial side reactions due to differences in the chemical potentials of the lithium ions. At the same time, the concentration of lithium is increased to provide a migration channel for lithium ions, which can reduce the interfacial resistance with the solid electrolyte.

The above x cannot have a value less than 0. In addition, x > 0.3 is undesirable due to LiF impurity phase formation and reduced ionic conductivity.

If above y is zero, then Formula 1 will not contain gallium (Ga), so y must be greater than zero. Also, if y is greater than or equal to 1, aluminum (Al) in Formula 1 will have a negative molarity, so y must be less than 1. The y may preferably be 0.1<y<0.9.

Since Formula 1 can contain aluminum only if (1/3)x+y is less than 1, (1/3)x+y must be less than 1. Furthermore, since x is 0≤x≤0.3 and y is 0<y<1, it is natural that (1/3)x+y exceeds 0.

In Formula 1, wherein x is 0≤x≤0.3, y is 0<y<1, and 0<(1/3)x+y<1, the ionic conductivity of the compound represented by Formula 1 may be 9X10⁻⁶S/cm or greater, preferably 1X10⁻⁵S/cm or greater.

The z is -0.6 to 0.3, and when z is less than -0.6, the effect of reducing the interfacial resistance between the positive electrode active material and the solid electrolyte is insignificant due to the inclusion of lithium at a low content, and the compound represented by Formula 2 may have a low ionic conductivity. In addition, z > 0.3 is undesirable due to LiF impurity phase formation and reduced ionic conductivity. Thus, in Formula 2, z may be -0.6≤z≤0.3, preferably - 0.6≤z<0.

In Formula 2, wherein -0.6≤z≤0.3, the ionic conductivity of the compound represented by Formula 2 above may be 8X10⁻⁷S/cm or greater, preferably 1X10⁻⁴S/cm or greater.

Furthermore, the thickness of the coating portion may be 10 to 200 nm, preferably 50 to 150 nm. As the thickness of the coating portion is 10 to 200 nm, the effect of reducing the interfacial resistance between the positive electrode active material and the solid electrolyte can be achieved. If the thickness of the coating portion is less than 10 nm, the effect of reducing the interfacial resistance is very insignificant, and if the thickness of the coating portion exceeds 200 nm, it is undesirable because it may not show the original electrochemical performance of the positive electrode active material due to the increase in interfacial resistance.

The compound represented by Formula 1 or 2 may be comprised in an amount of 0.1 to 5 parts by weight, preferably 0.1 to 1 parts by weight, based on 100 parts by weight of the core portion. The interfacial resistance reduction effect can be obtained within the range of 0.1 to 5 parts by weight, and there is a problem that the interfacial resistance increases outside the above range, and the electrochemical properties of the all-solid-state battery including it cannot be improved.

### Method of Preparing Positive Electrode Active Material for All-Solid-State Battery

The present invention relates to a method for preparing a positive electrode active material for an all-solid-state battery, comprising:
(1) mixing a lithium precursor, an aluminum precursor, a gallium precursor, a fluorine precursor, and a lithium metal oxide, or mixing a lithium precursor, a gallium precursor, a fluorine precursor, and a lithium metal oxide to prepare a mixture;
(2) heating and drying the mixture; and
(3) calcining the heated and dried mixture.

The step (1) is mixing a lithium precursor, an aluminum precursor, a gallium precursor, a fluorine precursor, and a lithium metal oxide, or mixing a lithium precursor, a gallium precursor, a fluorine precursor, and a lithium metal oxide to prepare a mixture.

Specifically, a mixture may be prepared by dispersing a lithium precursor, an aluminum precursor, a gallium precursor and a fluorine precursor in a suitable solvent to prepare a dispersion, and then adding a lithium metal oxide, which is a positive electrode active material, to the dispersion.

Specifically, a mixture may be prepared by dispersing a lithium precursor, a gallium precursor and a fluorine precursor in a suitable solvent to prepare a dispersion, and then adding a lithium metal oxide, which is a positive electrode active material, to the dispersion.

The solvent may be, without limitation, any solvent that can be quickly removed without degrading the electrochemical properties of the lithium metal oxide, and in one example, an anhydrous ethanol solvent may be used.

The lithium precursor may be, for example, but not limited to, CH₃COOLi·2H₂O, LiOH or LiNO₃.

The aluminum precursor may be, for example, but not limited to, Al(NO₃)₃·9H₂O or Al(OH)₃.

The gallium precursor may be, for example, but not limited to, Ga(NO₃)₃·xH₂O.

The fluorine precursor may be, for example, NH₄F or C₈H₁₅BF₄N₂, but is not limited thereto.

Further, the lithium precursor, aluminum precursor, gallium precursor, and fluorine precursor may be mixed in a molar ratio of 3:0.2:0.8:6 to 3.3:0.45:0.45:6.

Further, the lithium precursor, gallium precursor, and fluorine precursor may be mixed in a molar ratio of 2.4:1.2:6 to 3.3:0.9:6.

Step (2) is heating and drying the mixture prepared in step (1).

The heating step may be simultaneous with stirring so that the mixture has a homogeneously dispersed phase, without agglomeration and precipitation in the solvent. The heating temperature may be 50 to 150°C, and the heating temperature is not particularly limited, as long as it is a temperature capable of evaporating the solvent. After evaporating the solvent by heating, the mixture can be dried to obtain a powdered mixture, and the drying can be used without limitation by methods used in the art, and in the present invention, the powdered mixture was dried at a temperature of 50 to 100°C, but is not limited thereto.

Step (3) is calcining the mixture heated and dried in step (2).

The calcination may be performed by increasing the temperature at a rate of 1 to 5°C/min to a temperature of 250 to 500°C, and calcining for 1 to 5 hours. Furthermore, the calcination may be carried out while injecting argon gas (Ar).

The calcined mixture can then be cooled to room temperature to obtain the positive electrode active material for an all-solid-state battery of the present invention described above. That is, the positive electrode active material for an all-solid-state battery may comprise: a core portion comprising a lithium metal oxide; and a coating portion located on a surface of the core portion and comprising a compound of Formula 1 or 2. The positive electrode active material for an all-solid-state battery is as described above.

### Positive Electrode for All-solid-state Battery

The present invention relates to a positive electrode for an all-solid-state battery, wherein the positive electrode may include a positive electrode active material, a solid electrolyte, a conductive material, and a binder, wherein the positive electrode active material is the positive electrode active material of the present invention as described above.

The positive electrode may comprise a positive electrode current collector and a positive electrode active material layer applied to one side or both sides of the positive electrode current collector. Thus, the positive electrode active material, solid electrolyte, conductive material, and binder may be included in the positive electrode active material layer.

The positive electrode current collector is intended for the support of the positive electrode active material layer and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The solid electrolyte may comprise at least one selected from the group consisting of a sulfide-based solid electrolyte, a polymer-based solid electrolyte, and an oxide-based solid electrolyte, preferably a sulfide-based solid electrolyte.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite-type solid electrolytes. Furthermore, the sulfide-based solid electrolyte may be doped with trace elements, for example, Li₆PS₅Cl additionally doped with bromine (Br).

The polymer-based solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethyleneoxide (PEO) main chain, and may include one or more thereof.

In the polymeric solid electrolyte of the present invention, the lithium salt is an ionizable lithium salt, which can be expressed as Li⁺X⁻. The anios of the lithium salts are not specifically limited, but may include F⁻, Cl⁻, Br⁻, I⁻, NO₃⁻, N(CN)₂, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₃SiAlO₈, LAGP-based compounds, LATP-based compounds, Li₁₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

The conductive material is a material that electrically connects the current collector and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives can be used as the conductive material. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the binder further increases the binding force between the components comprised of the positive electrode, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

### All-Solid-State Battery

The present invention relates to an all-solid-state battery comprising a positive electrode; a negative electrode; and a solid electrolyte layer between the positive electrode and negative electrode, wherein the positive electrode is the positive electrode of the present invention as described above.

The negative electrode may comprise a negative electrode current collector and a negative electrode active material layer located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions (Li⁺), and any material that can react with lithium ions to reversibly form lithium-containing compounds.

For example, the negative electrode active material may include, but not limited to, one or more carbonaceous materials selected from the group consisting of crystalline artificial graphite, crystalline natural graphite, amorphous hard carbon, low crystalline soft carbon, carbon black, acetylene black, ketjen black, super-P, graphene, and fibrous carbon, Si-based materials, LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb or Ge; Me' is Al, B, P, Si; elements of Group 1, 2 or 3 of the periodic table; halogen; 0<x≤1; 1≤y≤3; and 1≤z≤8) and other metal complex oxides; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers, such as polyacetylene; Li-Co-Ni based materials; titanium oxides; and lithium titanium oxides.

Further, the negative electrode may comprise a negative electrode current collector and a coating layer comprising metal-carbon composite particles positioned on the negative electrode current collector. This may mean an anodeless battery, which does not contain a negative electrode active material.

The negative electrode may be such that when the all-solid-state battery is charged, lithium ions pass through the coating layer to reach the surface of the negative electrode current collector, and are electrodeposited to form a lithium metal layer.

The metal-carbon composite particles may have a structure in which carbon particles and metal particles are mutually attached or one is coated on the surface of the other, and may be physically or chemically bonded.

The carbon particles may include natural graphite, artificial graphite, hard carbon, soft carbon, carbon black, acetylene black, ketjen black, channel black, furnace black, lamp black, summer black, carbon nanotubes, fullerene, carbon fiber, and carbon fluoride.

The metal particles may be lithiophilic metals, for example, Ni, Cu, Ag, Au, Pt, Al, Zn, and Bi, and may be any one or a combination of two or more thereof. It is advantageous to form a stable and uniform lithium layer on the surface of the current collector by introducing a metal having the lithiophilic properties.

The negative electrode may be prepared by mixing a binder solution and the composite particles to prepare a slurry for forming a coating layer, and then applying and drying the slurry onto a negative electrode current collector. In this case, the binder may be any conventional binder used in the art.

The solid electrolyte layer is a layer of solid electrolyte, wherein the solid electrolyte is as described above. Accordingly, the solid electrolyte may comprise at least one selected from the group consisting of a sulfide-based solid electrolyte, a polymer-based solid electrolyte, and an oxide-based solid electrolyte, preferably a sulfide-based solid electrolyte.

As described above, the positive electrode active material of the present invention includes a coating comprising Formula 1 on the surface of the core portion comprising the lithium metal oxide, it is possible to prevent the lithium metal oxide, which is the positive electrode active material, from directly contacting the solid electrolyte, thereby reducing the side reaction occurring between the positive electrode active material and the solid electrolyte, and thereby reducing the interfacial resistance. Thus, all-solid-state batteries containing it can achieve improved lifetime characteristics. Thus, the all-solid-state battery of the present invention can have excellent lifetime characteristics.

### [Mode for Practicing the Invention]

The present invention will now be further described with reference to the following examples, but the following examples are intended to illustrate the invention and are not intended to limit the scope of the invention.

### <Manufacturing Positive Electrode Active Material Comprising Coating Portion Comprising Compound Represented by Formula 1 and All-Solid-State Battery Comprising Same>

### Example 1-1. Manufacturing Positive Electrode Active Material for All-Solid-State Battery

The above precursors were dispersed by adding CH₃COOLi·2H₂O, Al(NO₃)₃·9H₂O,

Ga(NO₃)₃·xH₂O and NH₄F in a molar ratio of 3.3:0.45:0.45:6 in anhydrous ethanol solvent. To the above dispersion, 2.4925 g of NCM811 was added, and then heated to a temperature of 90 °C for 2 hours with stirring at 200 rpm to evaporate the anhydrous ethanol solvent.

Drying was then performed at 90°C for 2 hours, followed by firing at 250°C for 2 hours after heating at a rate of 5°C/min while injecting argon gas. After then, it was cooled to room temperature, and then ground to prepare a positive electrode active material.

The positive electrode active material comprises a core portion and a coating portion located on the surface of the core portion, wherein the core portion is NCM811 and the coating portion comprises a compound of the Formula 1, Li₃₊ₓAl_{[1-(1/3)x-y]}Ga_{y}F₆.

ICP analysis of the coating portion showed that the coating portion of the positive electrode active material of Example 1-1 comprises Li_{3.3}Al_{0.45}Ga_{0.45}F₆. In other words, it was found that the coating portion of the positive electrode active material of Example 1-1 has the compound of Formula 1, Li₃₊ₓAl_{[1-(1/3)x-y]}Ga_{y}F₆, wherein x is 0.3 and y is 0.45.

### Example 1-2. Manufacturing All-Solid-State Battery

A solid electrolyte layer of about 10 mm thick was prepared by pressurizing 100 mg of Li₆PS₅Cl at a pressure of 2.5 tons.

The positive electrode was prepared by mixing the positive electrode active material prepared in Example 1-1, conductive material (carbon fiber), and solid electrolyte (Li₆PS₅Cl) in a weight ratio of 80:19:1, and applying the mixture to the solid electrolyte film together with the positive electrode current collector and pressurizing it to prepare a positive electrode.

Li-In alloy was used as the negative electrode.

The positive electrode, solid electrolyte layer, negative electrode, and SUS current collector were stacked in the above order, and then pressurized at a pressure of 3.5 tons to prepare the all-solid-state battery of Example 1-2.

### Example 2-1. Manufacturing Positive Electrode Active Material for All-Solid-State Battery

The positive electrode active material was prepared by performing the same procedure as Example 1-1 above, except that the molar ratio of CH₃COOLi·2H₂O, Al(NO₃)₃·9H₂O, Ga(NO₃)₃·xH₂O and NH₄F was 3:0.2:0.8:6.

The positive electrode active material comprises a core portion and a coating portion located on the surface of the core portion, wherein the core portion is NCM811 and the coating portion comprises a compound of Formula 1, Li₃₊ₓAl_{[1-(1/3)x-y]}Ga_{y}F₆.

ICP analysis of the coating portion showed that the coating portion of the positive electrode active material of Example 2-1 contains Li₃Al_{0.2}Ga_{0.8}F₆. In other words, it was found that the coating portion of the positive electrode active material of Example 2-1 has the compound of Formula 1, Li₃₊ₓAl_{[1-(1/3)x-y]}Ga_{y}F₆, wherein x is 0 and y is 0.8.

### Example 2-2. Manufacturing All-Solid-State Battery

The all-solid-state battery of Example 2-2 was prepared by performing the same procedure as Example 1-2, except that the positive electrode active material of Example 2-1 was used.

### Example 3-1. Manufacturing Positive Electrode Active Material for All-Solid-State Battery

The positive electrode active material was prepared by performing the same procedure as Example 1-1 above, except that the molar ratio of CH₃COOLi·2H₂O, Al(NO₃)₃·9H₂O, Ga(NO₃)₃·xH₂O and NH₄F was 3:0.5:0.5:6.

The positive electrode active material comprises a core portion and a coating portion located on the surface of the core portion, wherein the core portion is NCM811 and the coating portion comprises a compound of Formula 1, Li₃₊ₓAl_{[1-(1/3)x-y]}Ga_{y}F₆.

ICP analysis of the coating portion showed that the coating portion of the positive electrode active material of Example 3-1 contains Li₃Al_{0.5}Ga_{0.5}F₆. In other words, it was found that the coating portion of the positive electrode active material of Example 3-1 has the compound of Formula 1, Li₃₊ₓAl_{[1-(1/3)x-y]}Ga_{y}F₆, wherein x is 0 and y is 0.5.

### Example 3-2. Manufacturing All-Solid-State Battery

The all-solid-state battery of Example 3-2 was prepared by performing the same procedure as Example 1-2, except that the positive electrode active material of Example 3-1 was used.

### Example 4-1. Manufacturing Positive Electrode Active Material for All-Solid-State Battery

The positive electrode active material was prepared by performing the same procedure as Example 1-1 above, except that the molar ratio of CH₃COOLi·2H₂O, Al(NO₃)₃·9H₂O, Ga(NO₃)₃·xH₂O and NH₄F was 3:0.8:0.2:6.

The positive electrode active material comprises a core portion and a coating portion located on the surface of the core portion, wherein the core portion is NCM811 and the coating portion comprises a compound of Formula 1, Li₃₊ₓAl_{[1-(1/3)x-y]}Ga_{y}F₆.

ICP analysis of the coating portion showed that the coating portion of the positive electrode active material of Example 4-1 contains Li₃Al_{0.8}Ga_{0.2}F₆. In other words, it was found that the coating portion of the positive electrode active material of Example 4-1 has the compound of Formula 1, Li₃₊ₓAl_{[1-(1/3)x-y]}Ga_{y}F₆, wherein x is 0 and y is 0.2.

### Example 4-2. Manufacturing All-Solid-State Battery

The all-solid-state battery of Example 4-2 was prepared by performing the same procedure as Example 1-2, except that the positive electrode active material of Example 4-1 was used.

### Comparative Example 1-1. Manufacturing Positive Electrode Active Material for All-Solid-State Battery

The positive electrode active material was prepared by performing the same procedure as Example 1-1 above, except that the molar ratio of CH₃COOLi·2H₂O, Ga(NO₃)₃·xH₂O and NH₄F was 3:1:6.

The positive electrode active material comprises a core portion and a coating portion located on the surface of the core portion, wherein the core portion is NCM811 and the coating portion comprises a compound of Li₃₊ₓGa_{y}F₆.

ICP analysis of the coating portion showed that the coating portion of the positive electrode active material of Comparative Example 1-1 comprises Li₃GaF₆. In other words, it was found that the coating portion of the positive electrode active material of Comparative Example 1-1 does not contain aluminum in the compound of Formula 1, Li₃₊ₓAl_{[1-(1/3)x-y]}Ga_{y}F₆, wherein x is 0, y is 1, and (1/3)x+y is 1.

### Comparative Example 1-2. Manufacturing All-Solid-State Battery

The all-solid-state battery of Comparative Example 1-2 was prepared by performing the same procedure as Example 1-2, except that the positive electrode active material of Comparative Example 1-1 was used.

### Comparative Example 2-1. Manufacturing Positive Electrode Active Material for All-Solid-State Battery

The positive electrode active material was prepared by performing the same procedure as Example 1-1 above, except that the molar ratio of CH₃COOLi·2H₂O, Al(NO₃)₃·9H₂O and NH₄F was 3.3:0.9:6.

The positive electrode active material comprises a core portion and a coating portion located on the surface of the core portion, wherein the core portion is NCM811 and the coating portion comprises a compound of Li₃₊ₓAl_{[1-(1/3)x-y]}F₆.

ICP analysis of the coating portion showed that the coating portion of the positive electrode active material of Comparative Example 2-1 comprises Li_{3.3}Al_{0.9}F₆. In other words, it was found that the coating portion of the positive electrode active material of Comparative Example 2-1 does not contain gallium in the compound of Formula 1, Li₃₊ₓAl_{[1-(1/3)x-y]}Ga_{y}F₆, wherein x is 0.3, and y is 0.

### Comparative Example 2-2. Manufacturing All-Solid-State Battery

The all-solid-state battery of Comparative Example 2-2 was prepared by performing the same procedure as Example 1-2, except that the positive electrode active material of Comparative Example 2-1 was used.

### <Manufacturing Positive Electrode Active Material Comprising Coating Portion Comprising Compound Represented by Formula 2 and All-Solid-State Battery Comprising Same>

### Example 5-1. Manufacturing Positive Electrode Active Material for All-Solid-State Battery

The above precursors were dispersed by adding CH₃COOLi·2H₂O, Ga(NO₃)₃·xH₂O and NH₄F in a molar ratio of 2.4:1.2:6 in anhydrous ethanol solvent. To the above dispersion, 2.4925 g of NCM811 was added, and then heated to a temperature of 90 °C for 2 hours with stirring at 200 rpm to evaporate the anhydrous ethanol solvent.

Drying was then performed at 90°C for 2 hours, followed by firing at 250°C for 2 hours after heating at a rate of 5°C/min while injecting argon gas. After then, it was cooled to room temperature, and then ground to prepare a positive electrode active material.

The positive electrode active material comprises a core portion and a coating portion located on the surface of the core portion, wherein the core portion is NCM811 and the coating portion comprises a compound of Formula 2, Li_{3+z}Ga_{[1-(1/3)z]}F₆.

ICP analysis of the coating portion showed that the coating portion of the positive electrode active material of Example 5-1 contains Li_{2.4}Ga_{1.2}F₆. In other words, it was found that the coating portion of the positive electrode active material of Example 5-1 has the compound of Formula 2, Li_{3+z}Ga_{[1-}(_{1/3)z]}F₆, wherein z is -0.6.

### Example 5-2. Manufacturing All-Solid-State Battery

A solid electrolyte layer of about 10 mm thick was prepared by pressurizing 100 mg of Li₆PS₅Cl at a pressure of 2.5 tons.

The positive electrode was prepared by mixing the positive electrode active material prepared in Example 5-1, conductive material (carbon fiber), and solid electrolyte (Li₆PS₅Cl) in a weight ratio of 80:19:1, and applying the mixture to the solid electrolyte film together with the positive electrode current collector and pressurizing it to prepare a positive electrode.

Li-In alloy was used as the negative electrode.

The positive electrode, solid electrolyte layer, negative electrode, and SUS current collector were stacked in the above order, and then pressurized at a pressure of 3.5 tons to prepare the all-solid-state battery of Example 5-2.

### Example 6-1. Manufacturing Positive Electrode Active Material for All-Solid-State Battery

The positive electrode active material was prepared by performing the same procedure as Example 5-1 above, except that the molar ratio of CH₃COOLi·2H₂O, Ga(NO₃)₃·xH₂O and NH₄F was 2.7:1.1:6.

The positive electrode active material comprises a core portion and a coating portion located on the surface of the core portion, wherein the core portion is NCM811 and the coating portion comprises a compound of formula 2, Li_{3+z}Ga_{[1-(1/3)z]}F₆.

ICP analysis of the coating portion showed that the coating portion of the positive electrode active material of Example 6-1 contains Li_{2.7}Ga_{1.1}F₆. In other words, it was found that the coating portion of the positive electrode active material of Example 6-1 has the compound of Formula 2, Li_{3+z}Ga_{[1-}(_{1/3)z]}F₆, wherein z is -0.3.

### Example 6-2. Manufacturing All-Solid-State Battery

The all-solid-state battery of Example 6-2 was prepared by performing the same procedure as Example 5-2, except that the positive electrode active material of Example 6-1 was used.

### Example 7-1. Manufacturing Positive Electrode Active Material for All-Solid-State Battery

The positive electrode active material was prepared by performing the same procedure as Example 5-1 above, except that the molar ratio of CH₃COOLi·2H₂O, Ga(NO₃)₃·xH₂O and NH₄F was 3:1:6.

The positive electrode active material comprises a core portion and a coating portion located on the surface of the core portion, wherein the core portion is NCM811 and the coating portion comprises a compound of Formula 2, Li_{3+z}Ga_{[1-(1/3)z]}F₆.

ICP analysis of the coating portion of the positive electrode active material of Example 7-1 contains Li₃GaF₆. In other words, it was found that the coating portion of the positive electrode active material of Example 7-1 has the compound of Formula 2, Li_{3+z}Ga_{[1-}(_{1/3)z]}F₆, wherein z is 0.

### Example 7-2. Manufacturing All-Solid-State Battery

The all-solid-state battery of Example 7-2 was prepared by performing the same procedure as Example 5-2, except that the positive electrode active material of Example 7-1 was used.

### Example 8-1. Manufacturing Positive Electrode Active Material for All-Solid-State Battery

The positive electrode active material was prepared by performing the same procedure as Example 5-1 above, except that the molar ratio of CH₃COOLi·2H₂O, Ga(NO₃)₃·xH₂O and NH₄F was 3.3:0.9:6.

The positive electrode active material comprises a core portion and a coating portion located on the surface of the core portion, wherein the core portion is NCM811 and the coating portion comprises a compound of Formula 2, Li_{3+z}Ga_{[1-(1/3)z]}F₆.

ICP analysis of the coating portion of the positive electrode active material of Example 8-1 contains Li_{3.3}Ga_{0.9}F₆. In other words, it was found that the coating portion of the positive electrode active material of Example 8-1 has the compound of Formula 2, Li_{3+z}Ga_{[1-}(_{1/3)z]}F₆, wherein z is 0.3.

### Example 8-2. Manufacturing All-Solid-State Battery

The all-solid-state battery of Example 8-2 was prepared by performing the same procedure as Example 5-2, except that the positive electrode active material of Example 8-1 was used.

### Comparative Example 3-1. Manufacturing Positive Electrode Active Material for All-Solid-State Battery

The positive electrode active material was prepared by performing the same procedure as Example 5-1 above, except that the molar ratio of CH₃COOLi·2H₂O, Al(NO₃)₃·9H₂O and NH₄F was 3:1:6.

The positive electrode active material comprises a core portion and a coating portion located on the surface of the core portion, wherein the core portion is NCM811 and the coating portion comprises a compound of Li_{3+z}Al_{[1-(1/3)z]}F₆.

ICP analysis of the coating portion showed that the coating portion of the positive electrode active material of Comparative Example 3-1 comprises Li₃AlF₆. In other words, it was found that the coating portion of the positive electrode active material of Comparative Example 3-1 is the compound of Formula 2, Li_{3+z}Ga_{[1-}(_{1/3)z]}F₆, wherein aluminum is contained instead of gallium.

### Comparative Example 3-2. Manufacturing All-Solid-State Battery

The all-solid-state battery of Comparative Example 3-2 was prepared by performing the same procedure as Example 5-2, except that the positive electrode active material of Comparative Example 3-1 was used.

### Comparative Example 4-1. Manufacturing Positive Electrode Active Material for All-Solid-State Battery

The positive electrode active material was prepared by performing the same procedure as Example 5-1 above, except that the molar ratio of CH₃COOLi·2H₂O, Ga(NO₃)₃·xH₂O and NH₄F was 3.45:0.85:6.

The positive electrode active material comprises a core portion and a coating portion located on the surface of the core portion, wherein the core portion is NCM811 and the coating portion comprises a compound of Formula 2, Li_{3+z}Ga_{[1-(1/3)z]}F₆.

ICP analysis of the coating portion showed that the coating portion of the positive electrode active material of Comparative Example 4-1 comprises Li_{3.45}Ga_{0.85}F₆. In other words, it was found that the coating portion of the positive electrode active material of Comparative Example 4-1 is the compound of Formula 2, Li_{3+z}Ga_{[1-}(_{1/3)z]}F₆, wherein z is 0.45.

### Comparative Example 4-2. Manufacturing All-Solid-State Battery

The all-solid-state battery of Comparative Example 4-2 was prepared by performing the same procedure as Example 5-2, except that the positive electrode active material of Comparative Example 4-1 was used.

### Comparative Example 5-1. Manufacturing Positive Electrode Active Material for All-Solid-State Battery

The positive electrode active material was prepared by performing the same procedure as Example 5-1 above, except that the molar ratio of CH₃COOLi·2H₂O, Ga(NO₃)₃·xH₂O and NH₄F was 3.6:0.8:6.

The positive electrode active material comprises a core portion and a coating portion located on the surface of the core portion, wherein the core portion is NCM811 and the coating portion comprises a compound of the Formula 2, Li_{3+z}Ga_{[1-(1/3)z]}F₆.

ICP analysis of the coating portion showed that the coating portion of the positive electrode active material of Comparative Example 5-1 comprises Li_{3.6}Ga_{0.8}F₆. In other words, it was found that the coating portion of the positive electrode active material of Comparative Example 5-1 is the compound of Formula 2, Li_{3+z}Ga_{[1-}(_{1/3)z]}F₆, wherein z is 0.6.

### Comparative Example 5-2. Manufacturing All-Solid-State Battery

The all-solid-state battery of Comparative Example 5-2 was prepared by performing the same procedure as Example 5-2, except that the positive electrode active material of Comparative Example 5-1 was used.

### Experimental Example 1: Measuring Ionic Conductivity of Coating Portion of Positive Electrode Active Material

The ionic conductivity of the coating portions of the positive electrode active materials prepared in Examples 1-1 to 8-1 and Comparative Examples 1-1 to 5-1 was measured.

The ionic conductivity was measured by electrochemical impedance spectroscopy (EIS) in the frequency range of 5.0 MHz to 7.0 MHz with an applied alternating current (AC) voltage of 10 mV by fabricating symmetrical cells of solid electrolyte (Li₆PS₅Cl)/ionic conductor/solid electrolyte (Li₆PS₅Cl) configuration.

The results of Examples 1-1 to 4-1 and Comparative Examples 1-1 and 2-1 are shown in Table 1 below, and the results of Examples 5-1 to 8-1 and Comparative Examples 3-1 to 5-1 are shown in Table 2 below.

**[Table 1]**

| | Ionic conductivity (S/cm) |
|---|---|
| Example 1-1 | 5.2X10⁻⁶ |
| Example 2-1 | 2.2X10⁻⁴ |
| Example 3-1 | 9.3X10⁻⁶ |
| Example 4-1 | 6.7X10⁻⁶ |
| Comparative Example 1-1 | 2.4X10⁻⁴ |
| Comparative Example 2-1 | 7.1X10⁻⁶ |

In Examples 1-1 to 4-1, the coating portion satisfies the range of x, y and (1/3)x+y of Formula 1. In contrast, in Comparative Examples 1-1 to 2-1, the coating portions comprise Li₃GaF₆ and Li_{3.3}Al_{0.9}F₆, respectively, which do not contain aluminum and gallium, respectively. In other words, in Comparative Example 1-1, y is 1, and in Comparative Example 2-1, y is 0.

From the results in Table 1 above, it can be seen that the ionic conductivity of the coating portion, the compound represented by Formula 1, is very high if 0≤x≤0.3, 0<y<1 and 0<(1/3)x+y<1. On the other hand, when y falls outside the above range, the ionic conductivity of the coating portion of the positive electrode active material of Comparative Example 2-1, which does not contain gallium, is very low, and it can be seen that no ionic conductivity enhancement effect can be obtained.

**[Table 2]**

| | Ionic conductivity (S/cm) |
|---|---|
| Example 5-1 | 5.7X10⁻⁴ |
| Example 6-1 | 4.1X10⁻⁴ |
| Example 7-1 | 2.4X10⁻⁴ |
| Example 8-1 | 8.5X10⁻⁵ |
| Comparative Example 3-1 | 6.8X10⁻⁸ |
| Comparative Example 4-1 | 1.5X10⁻⁸ |
| Comparative Example 5-1 | 4.4X10⁻⁹ |

In Examples 5-1 to 8-1, the coating portion comprises Li_{2.4}Ga_{1.2}F₆, Li_{2.7}Ga_{1.1}F₆, Li₃GaF₆ and Li_{3.3}Al_{0.9}F₆, respectively, satisfying the z range of Formula 2 above. On the other hand, in Comparative Examples 3-1 to 5-1, the coating portionss comprise Li₃AlF₆, Li_{3.45}Ga_{0.85}F₆ and Li_{3.6}Ga_{0.8}F₆, respectively, wherein aluminum is contained instead of gallium or x exceeds 0.3 in Formula 2, which falls outside the range of x in Formula 2.

From the above results, it can be seen that the ionic conductivity of the coating portion is very high if -0.6≤z≤0.3 in Formula 2, which is a compound represented by Formula 2. On the other hand, when z falls outside the above range, the ionic conductivity of the coating portion is very low, and it can be seen that no ionic conductivity enhancement effect can be obtained.

### Experimental Example 2: Measuring Electrochemical Stability Window of Coating Portion of Positive Electrode Active Material

The electrochemical stability of the coating portions of the positive electrode active materials prepared in Examples 2-1 to 3-1 and Comparative Examples 1-1 to 2-1 was measured.

Electrochemical stability was measured at 0 V to 5 V at a rate of 1.0 mV/s using linear sweep voltammetry (LSV) with biologic electrochemical equipment, and the results are shown in Table 3 below.

**[Table 3]**

| | Electrochemical stability window (V vs. Li/Li⁺) |
|---|---|
| Example 2-1 | 2.50 - 4.64 |
| Example 3-1 | 2.50 - 4.65 |
| Comparative Example 1-1 | 2.50 - 4.55 |
| Comparative Example 2-1 | 2.50 - 4.70 |

In Examples 2-1 and 3-1, the coating portion satisfies the range of x, y and (1/3)x+y of Formula 1 above. In contrast, in Comparative Examples 1-1 and 2-1, the coating portions comprise Li₃GaF₆ and Li_{3.3}Al_{0.9}F₆, respectively, which do not contain aluminum and gallium, respectively. In other words, in Comparative Example 1-1, y is 1, and in Comparative Example 2-1, y is 0.

From the results in Table 3 above, it can be seen that the electrochemical stability of the coating portion, the compound represented by Formula 1, is very high if 0≤x≤0.3, 0<y<1 and 0<(1/3)x+y<1. On the other hand, when y falls outside the above range, the electrochemical stability of the coating portion of the positive electrode active material of Comparative Example 1-1, which does not contain aluminum, is very low, and it can be seen that no electrochemical stability enhancement effect can be obtained.

From the results of Experimental Examples 1 and 2 above, it can be seen that the positive electrode active material of the present invention has excellent ionic conductivity and electrochemical stability.

### Experimental Example 3: Evaluating Charge/Discharge and Lifetime Characteristics of All-Solid-State Battery

The charge, discharge and lifetime characteristics of the all-solid-state batteries of Examples 2-2, 3-2, 5-2, 6-2 and Comparative Examples 1-2, 2-2, 4-2 and 5-2 were measured.

The charge and discharge characteristics were measured by charging the all-solid-state battery to 3.7V at 0.1C in CCCV mode at a temperature of 25°C and discharging it to 1.9V at constant current, and the results are shown in Tables 4 and 5 below.

After measuring the charge and discharge characteristics, the lifetime characteristics was measured by the capacity retention rate by charging the all-solid-state battery to 3.7V at 0.5C in CCCV mode at a temperature of 25°C and discharging it to 1.9V at a constant current for 100 charge and discharge cycles, and the results are shown in Tables 6 and 7 below.

**[Table 4]**

| | Charge capacity (mAh/g) | Discharge capacity (mAh/g) | Charge and discharge efficiency (%) |
|---|---|---|---|
| Example 2-2 | 233.5 | 205.1 | 87.8 |
| Example 3-2 | 231.8 | 203.6 | 87.8 |
| Comparative Example 1-2 | 230.2 | 201.2 | 87.4 |
| Comparative Example 2-2 | 231.3 | 202.9 | 87.7 |

**[Table 5]**

| | Charge capacity (mAh/g) | Discharge capacity (mAh/g) | Charge and discharge efficiency (%) |
|---|---|---|---|
| Example 5-2 | 230.8 | 201.0 | 87.7 |
| Example 6-2 | 230.2 | 200.1 | 87.5 |
| Comparative Example 4-2 | 229.1 | 199.8 | 87.2 |
| Comparative Example 5-2 | 228.1 | 197.3 | 86.5 |

**[Table 6]**

| | 100^{th} Discharge capacity (mAh/g) | 100^{th} Capacity retention (%) | 100^{th} Charge and discharge efficiency (%) |
|---|---|---|---|
| Example 2-2 | 167.7 | 91.0 | 99.9 |
| Example 3-2 | 164.7 | 90.6 | 99.9 |
| Comparative Example 1-2 | 157.7 | 89.7 | 99.8 |
| Comparative Example 2-2 | 163.2 | 90.5 | 99.8 |

**[Table 7]**

| | 100^{th} Discharge capacity (mAh/g) | 100^{th} Capacity retention (%) | 100^{th} Charge and discharge efficiency (%) |
|---|---|---|---|
| Example 5-2 | 159.1 | 90.5 | 99.9 |
| Example 6-2 | 157.0 | 90.0 | 99.8 |
| Comparative Example 4-2 | 150.5 | 89.4 | 99.8 |
| Comparative Example 5-2 | 149.1 | 87.7 | 99.8 |

From the results in Tables 4 and 6 above, it can be seen that the positive electrode active materials included in the all-solid-state batteries of Examples 2-2 and 3-2 have better ionic conductivity and electrochemical stability than the positive electrode active materials included in the all-solid-state batteries of Comparative Examples 1-2 and 2-2, and therefore the all-solid-state batteries of Examples 2-2 and 3-2 have improved initial charge/discharge capacity and lifetime characteristics compared to the all-solid-state batteries of Comparative Examples 1-2 and 2-2.

From the results in Tables 5 and 7 above, it can be seen that the positive electrode active materials included in the all-solid-state batteries of Examples 5-2 and 6-2 have better ionic conductivity than the positive electrode active materials included in the all-solid-state batteries of Comparative Examples 4-2 and 5-2, and therefore the all-solid-state batteries of Examples 5-2 and 6-2 have improved initial charge/discharge capacity and lifetime characteristics compared to the all-solid-state batteries of Comparative Examples 4-2 and 5-2.

## Claims

1. A positive electrode active material for an all-solid-state battery comprising a core portion comprising a lithium metal oxide; and a coating portion located on a surface of the core portion and comprising a compound represented by Formula 1 or 2:
[Formula 1] Li₃₊ₓAl_{[1-(1/3)x-y]}Ga_{y}F₆
wherein x is 0≤x≤0.3, y is 0<y<1, and 0<(1/3)x+y<1.
[Formula 2] Li_{3+z}Ga_{[1-(1/3)z]}F₆
wherein z is -0.6≤z≤0.3.

2. The positive electrode active material for an all-solid-state battery according to claim 1, wherein y is 0.1<y<0.9.

3. The positive electrode active material for an all-solid-state battery according to claim 1, wherein z is -0.6<z<0.

4. The positive electrode active material for an all-solid-state battery according to claim 1, wherein the coating portion has a thickness of 10 to 200 nm.

5. The positive electrode active material for an all-solid-state battery according to claim 1, wherein the compound represented by Formula 1 or 2 is comprised in an amount of 0.1 to 5 parts by weight, based on 100 parts by weight of the core portion.

6. The positive electrode active material for an all-solid-state battery according to claim 1, wherein the compound represented by Formula 1 has an ionic conductivity of 9X10⁻⁶ S/cm or greater,
wherein the compound represented by Formula 2 has an ionic conductivity of 8X10⁻⁷ S/cm or greater.

7. A method of preparing a positive electrode active material for an all-solid-state battery according to any one of claims 1 to 6, comprising the step of: (1) mixing a lithium precursor, an aluminum precursor, a gallium precursor, a fluorine precursor, and a lithium metal oxide, or mixing a lithium precursor, a gallium precursor, a fluorine precursor, and a lithium metal oxide to prepare a mixture;
(2) heating and drying the mixture; and
(3) calcining the heated and dried mixture.

8. The method of preparing a positive electrode active material for an all-solid-state battery according to claim 7, wherein the lithium precursor, aluminum precursor, gallium precursor, and fluorine precursor are mixed in a molar ratio of 3.3:0.45:0.45:6 to 3:0.8:0.2:6.

9. The method of preparing a positive electrode active material for an all-solid-state battery according to claim 7, wherein the lithium precursor, gallium precursor, and fluorine precursor are mixed in a molar ratio of 2.4:1.2:6 to 3.3:0.9:6.

10. The method of preparing a positive electrode active material for an all-solid-state battery according to claim 7, wherein the calcination is performed by increasing the temperature at a rate of 1 to 5°C/min to a temperature from 250 to 500°C, and calcining for 1 to 5 hours.

11. A positive electrode for an all-solid-state battery comprising the positive electrode active material according to any one of claims 1 to 6, a solid electrolyte, a conductive material, and a binder.

12. An all-solid-state battery comprising a positive electrode according to claim 11; a negative electrode; and a solid electrolyte layer between the positive electrode and negative electrode.

13. The all-solid-state battery according to claim 12, wherein the solid electrolyte comprises at least one selected from the group consisting of a sulfide-based solid electrolyte, a polymer-based solid electrolyte, and an oxide-based solid electrolyte.

14. The all-solid-state battery according to claim 13, wherein the solid electrolyte comprises a sulfide-based solid electrolyte.
